# EUROPEAN PATENT APPLICATION

(11) **EP 1 355 216 A2**
(43) Date of publication of application: **22.10.2003**
(21) Application number: 02256972.7
(22) Date of filing: 04.10.2002
(51) Int. Cl.: G06F 1/00

(54) **Secure computer system**

(30) Priority: 18.04.2002 KR 2002021235
(71) Applicant: SAMSUNG ELECTRONICS CO., LTD., Suwon-City, Kyungki-do (KR)
(72) Inventor: Park, Kyun-hoe, Paldal-ku, Suwon-City, Kyungki-do (KR)
(74) Representative: Geary, Stuart Lloyd

(57) **Abstract**

A secure computer system uses a mobile phone network SIM card (50) as a source of user authentication information to determine whether to allow a user access.

## Description

The present invention relates to a secure computer system comprising a user authentication information source and a computer configured such that, during booting, it obtains user authentication data from said source and compares said authentication data with data stored in the computer, enabling user access to the computer in dependence on the result thereof.

There are various security methods to protect confidential information stored in computer systems. For instance, a computer system can be protected by a password which is set up by means of a BIOS (basic input/output system) setup menu and stored in a CMOS (complementary metal oxide semiconductor) RAM (random access memory) or a hard disk. However, security methods using CMOS RAM or a hard disk can allow a proficient user to gain illegal access to the computer system without difficulty.

To strengthen security of a computer system, there has been proposed other security methods using bio-information, such as fingerprints, IC (integrated circuit) cards, magnetic cards, PC (personal computer) card, etc.

In the case of security methods using bio-information, such as fingerprints, irises, etc., although security of the computer system is strengthened because individual characteristics of a user are employed to control access, such security methods require expensive equipment.

In the case of security methods using IC cards, magnetic cards, PC cards, etc., a user has to buy these cards separately, which can be uneconomical and cumbersome. Furthermore, the passwords stored in the cards are not based upon individual characteristics of a user, but voluntary information set up by a user or a card supplier, so that the password employed for verifying a user's identity has relatively low reliability. In the particular case of the PC card, if the PC card remains attached to the computer system, anyone can access and change data stored in the PC card.

On the other hand, there is the GSM (Global System for Mobile Communications) mobile phone standard. In order to be able to use a GSM phone, a user has to be issued a SIM card storing user identification information, and the user inserts the SIM card in the GSM phone. The SIM card is detachably inserted in the mobile phone, and a user can access the wireless communication system with the user identification information stored in the SIM card.

The user identification information stored in the SIM card is employed for authenticating a registered user and preventing an unregistered user from accessing the wireless communication system. Furthermore, the user identification information stored in the SIM card is typically thoroughly protected from disclosure to or recovery by a third party, thereby preventing, for example, wiretapping and access to the user's identification information.

A computer system according to the present invention is characterised in that the user authentication information source comprises a subscriber identity module for a mobile phone.

The subscriber identity module may be mounted in a wireless communication card, preferably one for a GSM network.

A card reader may be provided for reading subscriber identity modules.

Embodiments of the present invention will now be described, by way of example, with reference to the accompanying drawings, in which:-
Figure 1 is a block diagram of a first computer system according to the present invention;
Figure 2 is a block diagram illustrating a second computer system according to the present invention;
Figure 3 is a control block diagram illustrating a third computer system according to the present invention;
Figure 4 is a flowchart of a process for setting up a password for a computer system according to the present invention; and
Figure 5 is a flowchart of a security control process of a computer system according to the present invention.

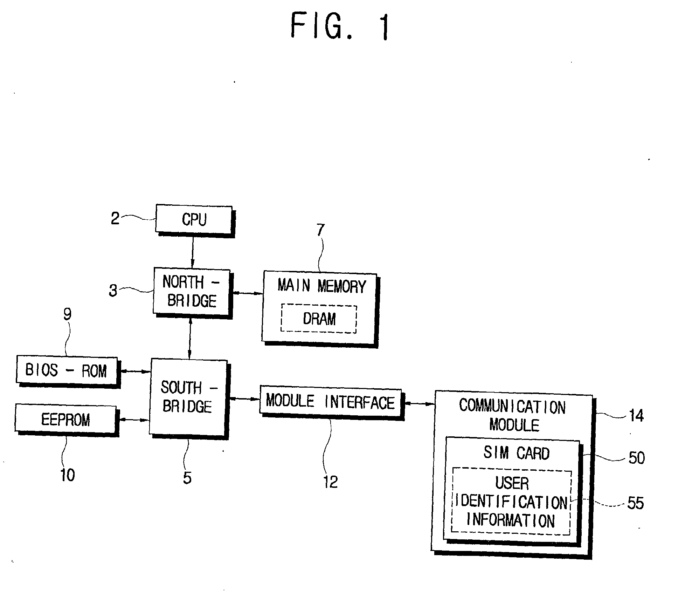

Referring to Figure 1, the computer system comprises a CPU (central processing unit) 2, a main memory 7, including a DRAM (dynamic random access memory), a BIOS-ROM 9 (basic input/output system - read only memory) storing a BIOS, a north bridge 3, a south bridge 5, an EEPROM (electrically erasable programmable read only memory) 10 storing user identification information, a module interface 12, a communication module 14 connected to the module interface 12, such as a PCI (peripheral component interconnect) interface, and a SIM card 50 storing user identification information 55 and mounted on the communication module 14.

The north bridge 3 is a chipset facilitating data transmission between the CPU 2, the main memory 7 and a graphic card (not shown). The south bridge 5 is a chipset for facilitating data transmission between the components of the system, such as internal and external peripheral devices, and the north bridge 3. That is, the south bridge 5 facilitates data transmission involving the module interfaces 12, a PCMCIA (personal computer memory card international association) interface, a USB (universal serial bus) interface, an ISA (industry standard architecture) interface, etc.

In Figure 1, the communication module 14 is a GSM modem suitable for accessing the Internet through a GSM network. However, the communication module 14 could be any communication module capable of wirelessly communicating with other devices and/or networks. For instance, a CDMA (code division multiple access) network communication module, compatible with GSM networks, is being developed and could be used as the communication module 14.

In Figure 1, the communication module 14 holds the SIM card 50, storing user identification information 55 for authentication. The user identification information 55 stored in the SIM card 50 is employed not only to verify a user's identity when a user accesses a communication network but also as a password for accessing the computer system 1.

The BIOS stored in the BIOS-ROM 9 as command codes determines whether devices of the computer system 1 are operating normally, and performs a POST (power on self test) procedure for loading an OS (operating system) from a hard disk into the main memory 7. Because typically the BIOS contains a security routine, the BIOS can determine whether the user identification information 55 stored in the SIM card 50 is identical to the user identification information stored in the EEPROM 10, perform the POST procedure, and allow a user to access the computer system 1 only when the user identification information 55 in the SIM card 50 is identical to the user identification information in the EEPROM 10.

In Figure 1, the user identification information compared with the user identification information 55 stored in the SIM card 50 may be stored in CMOS-RAM, a hard disk, etc., instead of the EEPROM 10.

In Figure 1, according to the present invention, when the south bridge 5, the north bridge 3 and the CPU 2 are set up in sequence and the BIOS stored in the BIOS-ROM 9 performs the POST procedure when the computer system is turned on or rebooted, and it is determined (for example, by software as part of the BIOS) whether the user identification information 55 stored in the SIM card 50 is identical to the user identification information stored in the EEPROM 10, thereby allowing a user to access the computer system only when the user identification information 55 in the SIM card 50 is identical to the user identification information in the EEPROM 10. The security control processes of the invention can be embodied in software and/or hardware, for example, as part of the north bridge 3, the south bridge 5, the BIOS 9 and/or the EEPROM 10 and executed on computer systems 1 using known techniques.

The module interface 12 and the communication module 14 of the computer system 1 can be applied to any computer system having a communication module carrying a SIM card.

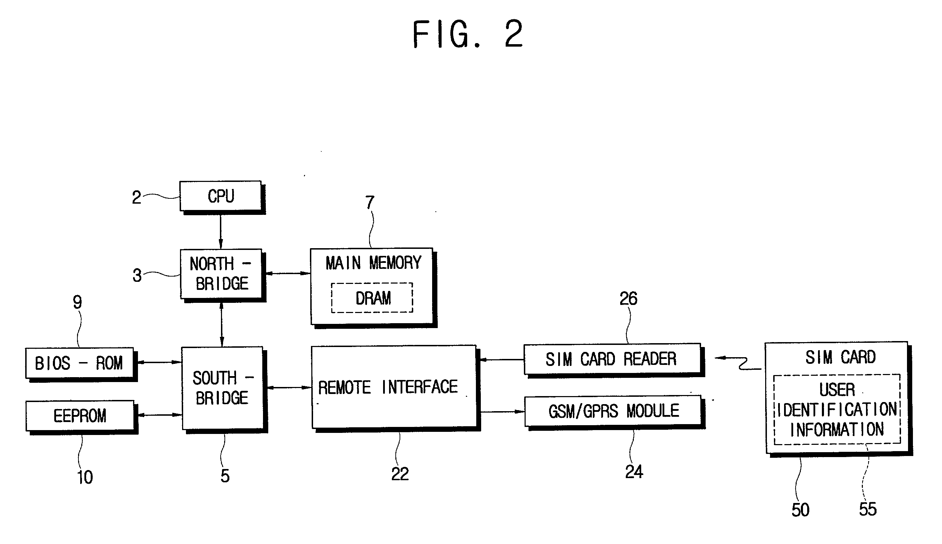

Referring to Figure 2, a secure computer system comprises a GSM/GPRS (global system for mobile communication / general packet radio services) module 24 mounted in the main body of a portable computer system 4, a SIM card reader 26 into which the SIM card 50 is inserted, and a remote interface 22 for transmitting data from the SIM card reader 26 to the south bridge 5 or the GSM/GPRS module 24.

The SIM card reader 26 is provided in the main body of the portable computer system 4, and the SIM card 50 is inserted in the SIM card reader 26. When the SIM card 50 is inserted in the SIM card reader 26, the SIM card reader 26 transmits a card connection signal to the remote interface 22, and the SIM card reader 26 reads data from the SIM card 50 according to a control signal transmitted from the remote interface 22.

The GSM/GPRS module 24 is a modem for accessing a GSM network using the SIM card 50, and is mounted in the main body of the portable computer 4. By means of the GSM/GPRS module 24, user identification information 55 stored in the SIM card 50 is transmitted to the GSM network for user authentication for accessing the GSM network. On the other hand, there is being developed technology that a user identification card, such as the SIM card 50, is applied to a CDMA module that is compatible with the GSM network, and therefore the modem 24 mounted in the main body may be a CDMA module.

The south bridge 5 controls the remote interface 22 so that it operates selectively as an interface between the SIM card 50 and the GSM/GPRS module 24 and an interface between the SIM card 50 and the south bridge 5. That is, if the portable computer system 4 requires a password while booting, the remote interface 22 reads the user identification information 55 stored in the SIM card 50 from the SIM card reader 26 and transmits the user identification information 55 to the south bridge 5, thereby allowing access to the computer system 4 as described above with reference to Figure 1 (i.e., determine whether the user identification information 55 stored in the SIM card 50 is identical to the user identification information stored in the EEPROM 10, allowing access responsive to a match). Further, when a user wants to access the GSM network using the GSM/GPRS module 24, the remote interface 22 reads the user identification information 55 stored in the SIM card 50 from the SIM card reader 26 and transmits the user identification information 55 to the GSM/GPRS module 24, thereby allowing access to the GSM network.

In Figure 2, in the computer system 4 with the GSM/GPRS module 24, the SIM card 50 is inserted in the SIM card reader 26, and the user identification information 55 stored in the SIM card 50 is employed in accessing the computer system 4 and the GSM network.

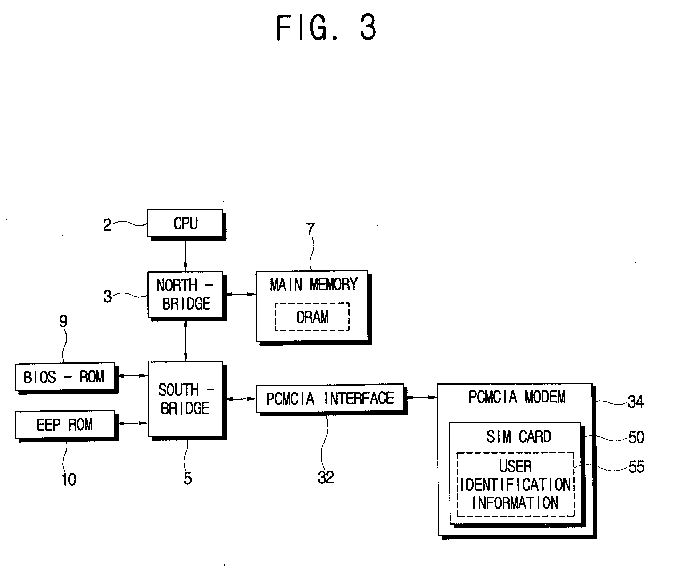

Referring to Figure 3, a secure computer system comprises a PCMCIA interface 32 and a detachable (portable) PCMCIA wireless modem 34 which is in communication with the computer 6 via the PCMCIA interface 32.

The detachable PCMCIA wireless modem 34 accesses the GSM network, and is provided with a card groove (not shown) having a card connector (not shown) to which the SIM card 50 can be connected. The PCMCIA interface 32 controls peripheral devices attached to a PCMCIA slot, such as the detachable (portable) PCMCIA wireless modem 34, according to PCMCIA standards based upon a control signal transmitted from the south-bridge 5.

In Figure 3, when the south bridge 5, the north bridge 3 and the CPU 2 are set up in sequence and a POST procedure is performed during turning on or rebooting of the computer system 6, a user can access the computer system 6 with the user identification information 55 stored in the SIM card 50 attached to the PCMCIA wireless modem 34, as described with reference to Figures 1 and 2.

The PCMCIA interface 32 in Figure 3, is only an example peripheral device interface 12 used in computer systems. Various other peripheral device interfaces 12, such as PCI interfaces, USB interfaces, ISA interfaces, etc., can be employed in a computer to interface with any SIM card communication module 14 that provides the user identification information 55 stored in the SIM card 50.

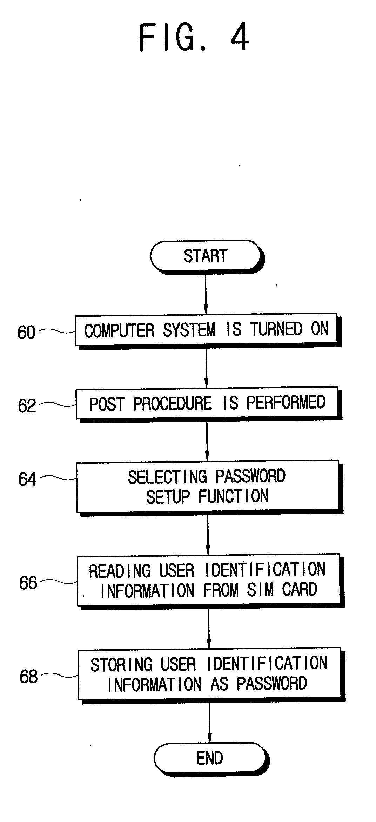

Referring to Figure 4, at operation 60, when a computer system of the present invention is turned on or rebooted, the south bridge 5, the north bridge 3 and the CPU 2 are set up in sequence and at operation 62 the BIOS stored in the BIOS-ROM 9 performs the POST procedure. While the POST procedure is being performed at operation 62, a user selects, at operation 64, a password setup function using a setup key such as F2. If, at operation 64, the user selects a SIM card access function in the password setup function, at operation 66, the computer system reads the user identification information 55 from the SIM card 50. At operation 68, the user identification information 55 read from the SIM card 50 is stored in the EEPROM 10.

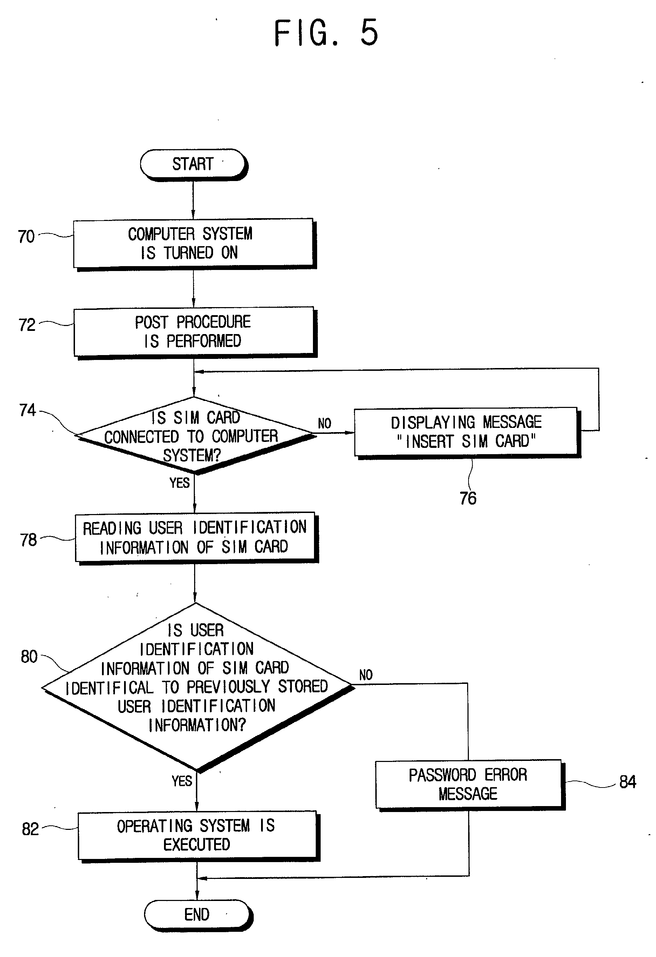

Referring to Figure 5, at operation 70, when a computer system of the present invention is turned on or rebooted, the south bridge 5, the north bridge 3 and the CPU 2 are set up in sequence and at operation 72 the BIOS stored in the BIOS-ROM 9 performs the POST procedure. Because, typically the BIOS contains a security routine, the BIOS can determine at operation 74 whether the SIM card 50 for authentication is connected to the computer system when performing the POST procedure. If, at operation 74, the SIM card 50 is not connected to the computer system, the BIOS displays a message at operation 76 so as to make a user connect the SIM card 50 to the computer system.

If the SIM card 50 is connected to the computer system at operation 74, the BIOS reads the user identification information 55 from the SIM card 50 at operation 78, and determines whether the user identification information 55 read from the SIM card 50 is identical to (matches/corresponds to) the user identification information previously stored in the EEPROM 10 at operation 80. If the user identification information 55, read from the SIM card 50, is identical to (matches/corresponds to) the user identification information previously stored in the EEPROM 10 at operation 80, an operating system is executed at operation 82, thereby allowing a user to access and use the computer system.

Oppositely, if the user identification information 55 read from the SIM card 50 is not identical (does not match/does not correspond) to the user identification information previously stored in the EEPROM 10 at operation 80, a password error message is displayed at operation 84, thereby protecting the computer system.

As described above, according to the present invention, the user identification information stored in a SIM card for mobile communications can be employed as the password of a computer system. Thus, a user can employ the user identification information of the SIM card, which has superior security, as the password for the computer system, thereby providing superior security for the computer system. As described above, the present invention provides a secure computer system using a SIM card and a security control method thereof, which provides inexpensive and superior security.

## Claims

1. A secure computer system comprising:
a user authentication information source (50); and
a computer configured such that, during booting, it obtains user authentication data from said source (50) and compares said authentication data with data stored in the computer, enabling user access to the computer in dependence on the result thereof,
**characterised in that**
the user authentication information source (50) comprises a subscriber identity module for a mobile phone.

2. A system according to claim 1, including a wireless communication card (14; 34), wherein the subscriber identity module (50) is mounted in the wireless communication card (14; 34).

3. A system according to claim 2, wherein the wireless communication card (14; 34) includes a transceiver for communication via a GSM network.

4. A system according to claim 1, including a card reader (26) for reading subscriber identity modules.

5. A secure computer system comprising:
a SIM card storing user identification information;
a communication module accessing a network with the user identification information stored in the SIM card;
a password storage storing the user identification information from the SIM card; and
a controller allowing a user to access the computer system upon booting of the computer system when the user identification information stored in the SIM card is identical to the user identification information stored in the password storage.

6. The computer system according to claim 5, further comprising:
a SIM card reader to which the SIM card is inserted; and
a remote interface transmitting the user identification information from the SIM card reader to the communication module according to control of the controller,
wherein the controller reads the user identification information from the SIM card inserted in the SIM card reader through the remote interface.

7. The computer system according to claim 5, wherein the communication module comprises a card connector to which the SIM card is detachably connected.

8. A method of controlling security of a computer system, comprising :
storing user identification information from a SIM card used to access a network;
reading the user identification information from the SIM card when the computer system is booted;
determining whether the user identification information stored in the SIM card is identical to the stored user identification information; and
allowing a user to access the computer system when the user identification information stored in the SIM card is identical to the stored user identification information.

9. The method according to claim 8, further comprising :
determining whether the SIM card is connected to the computer system; and
informing a user of absence of the SIM card when the SIM card is not connected to the computer system.

10. The computer system of claim 5, wherein an EPROM is the password storage.

11. The computer system of claim 7, wherein the controller is a BIOS.

12. The computer system of claim 5, further comprising a device interface interfacing with external devices and wherein the communication module is portable and in communication with the controller via the device interface.

13. The computer system of claim 5 wherein the network is a GSM network.

14. A computer system, comprising:
a password storage storing user identification information of a SIM card; and
a controller in communication with the SIM card and allowing access to the computer system upon booting of the computer system when the user identification information of the SIM card matches the user identification information stored in the password storage.

15. The computer system of claim 14, further comprising an interface interfacing with the SIM card and wherein the controller is in communication with the SIM card via the interface.

16. The computer system of claim 15, wherein the communication module accesses a GSM network.

17. The computer system of claim 15, wherein the interface is one or more of a PCI, a USB, a PCMCIA, and an ISA interface.

18. A secure computer system, comprising:
a SIM card communication module accessing a GSM network using user identification information of a SIM card; and
a controller in communication with the SIM card communication module and allowing access to the computer system based upon the user identification information of the SIM card.

19. A secure computer system, comprising:
storage means for storing user identification information of a SIM card; and
control means for communicating with the SIM card and for allowing access to the computer system upon booting of the computer system when the user identification information of the SIM card matches the user identification information stored in the storage means.

20. The secure computer system of claim 19, further comprising interface means for interfacing with the SIM card, wherein the control means communicates with the SIM card via the interface means.
